(19) **Europäisches Patentamt**
**European Patent Office**
**Office européen des brevets**

(11) **EP 4 115 336 B1**

(12) **EUROPEAN PATENT SPECIFICATION**

(45) Date of publication and mention
of the grant of the patent:
**25.02.2026 Bulletin 2026/09**

(21) Application number: **20718648.7**

(22) Date of filing: **09.04.2020**

(51) International Patent Classification (IPC):
***G06N 3/045*** (2023.01)      ***G06N 3/048*** (2023.01)

(52) Cooperative Patent Classification (CPC):
**G06N 3/048; G06N 3/045; G06N 3/0464**

(86) International application number:
**PCT/EP2020/060186**

(87) International publication number:
**WO 2021/204392 (14.10.2021 Gazette 2021/41)**

(54) **DEVICES AND METHODS FOR PROVIDING COMPUTATIONALLY EFFICIENT NEURAL NETWORKS**

VORRICHTUNGEN UND VERFAHREN ZUR BEREITSTELLUNG VON RECHENEFFIZIENTEN NEURONALEN NETZWERKEN

DISPOSITIFS ET PROCÉDÉS PERMETTANT DE FOURNIR DES RÉSEAUX NEURONAUX INFORMATIQUEMENT EFFICACES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.01.2023 Bulletin 2023/02**

(73) Proprietor: **Huawei Technologies Co., Ltd.
Shenzhen, Guangdong 518129, (CN)**

(72) Inventors:
• **MOUSHKATEL, Haim
80992 Munich (DE)**
• **MIZRACHI, Dror
80992 Munich (DE)**
• **KESELMAN, Ariel
80992 Munich (DE)**

(74) Representative: **Isarpatent
Patent- und Rechtsanwälte Barth
Charles Hassa Peckmann & Partner mbB
Friedrichstrasse 31
80801 München (DE)**

(56) References cited:
• **GAIHUA WANG: "Application of Interpolation Pooling in Convolutional Neural Networks", HELIX, vol. 8, no. 4, 30 June 2018 (2018-06-30), pages 3465 - 3469, XP055754145, ISSN: 2277-3495, DOI: 10.29042/2018-3465-3469**
• **KIM SANGPIL ET AL: "Latent transformations neural network for object view synthesis", VISUAL COMPUTER, SPRINGER, BERLIN, DE, vol. 36, no. 8, 19 October 2019 (2019-10-19), pages 1663 - 1677, XP037194134, ISSN: 0178-2789, [retrieved on 20191019], DOI: 10.1007/S00371-019-01755-X**

## Description

TECHNICAL FIELD

The present disclosure relates to data processing. More specifically, the present disclosure relates to devices and methods for providing computationally efficient neural networks, i.e. neural networks being less demanding with respect to computational resources than conventional neural networks.

BACKGROUND

Artificial Intelligence (AI), for instance, in the form of deep neural networks (DNNs), is being implemented in more and more electronic devices. DNNs, however, are usually demanding with respect to computational resources and consume a significant amount of energy, for instance, due to frequent memory accesses. Therefore, it is a challenge to implement DNNs on electronic devices with reduced hardware capabilities in terms of processing power, memory and energy storage, such as smartphones or other types of IoT devices.

Document "Application of Interpolation Pooling in Convolutional Neural Networks", Wang, G., Yuan, G. Lv, M. and Liu, W., HELIX, vol. 8, no. 4, 2018-06-30, pages 3465-3469, XP055754145, ISSN: 2277-3495, D1 discloses a convolutional pooling Neural Network, including interpolation of the results.

SUMMARY

It is an objective of the present disclosure to provide devices and methods for providing computationally efficient neural networks, i.e. neural networks being less demanding with respect to computational resources than conventional neural networks.

The foregoing and other objectives are achieved by the subject matter of the independent claims. Further implementation forms are apparent from the dependent claims, the description and the figures.

Generally, embodiments of the present disclosure provide devices and methods implementing an advantageous neural network architecture (herein also referred to as a "spatio-pyramidal" neural network architecture) based on one or more interpolation layers for down-sampling data. As used herein, an interpolation layer is configured to process data by determining a respective output data array based on a respective input data array using interpolation, wherein a spatial dimension of the respective output data array comprises less data points than the corresponding spatial dimension of the respective input data array. By replacing computationally demanding conventional down-sampling layers, such as conventional pooling layers (e.g. maximum, minimum, mean and/or average pooling layers), and/or conventional convolutional layers with a stride by interpolation layers, embodiments of the present disclosure allow providing a desired accuracy while using less memory and computational resources than conventional neural network architectures for processing data.

As used herein, a conventional pooling layer is a neural network processing layer configured to reduce the dimensions of the data by combining data, such as a maximum, minimum, mean and/or average pooling layer. As used herein, the stride of a conventional convolutional layer denotes the number of data elements by which the convolutional window, i.e. the kernel moves after each convolution operation.

More specifically, according to a first aspect, a data processing apparatus is provided, comprising processing circuitry configured to implement a neural network. The neural network comprises a plurality of processing layers for sequentially processing data, wherein, for down-sampling the data, the plurality of processing layers comprise a plurality of interpolation layers. Each interpolation layer of the plurality of processing layers is configured to process the data by determining a respective output data array based on a respective input data array using interpolation, wherein a spatial dimension of the respective output data array comprises less data points than the corresponding spatial dimension of the respective input data array.

Thus, according to the present disclosure, interpolation layers are used for down-sampling, i.e. reducing the size of the data processed by the neural network, and not pooling layers or convolutional layers with a stride as in conventional neural network architectures. The interpolation layers may provide a smoother continuous down-sampling in contrast to the "stepwise" down-sampling (such as a down-sampling by a factor of 2) provided by the pooling layers or convolutional layers with stride employed in conventional neural network architectures.

In a further possible implementation form, the plurality of processing layers of the neural network further comprise a plurality of convolutional layers with a stride equal to 1 (i.e. without down-sampling), wherein each interpolation layer of the plurality of interpolation layers in the processing direction immediately follows a respective convolutional layer of the plurality of convolutional layers. This allows providing a smoother continuous down-sampling.

In a further possible implementation form, each interpolation layer of the plurality of interpolation layers is configured to process the respective input data array into the respective output data array by interpolating the data of the respective input data array using at least one of a linear interpolation, a bilinear interpolation, a cubic interpolation, an area interpolation, a nearest neighbour interpolation and/or other interpolation schemes providing for a down-sampling of the data processed by the neural network. This allows implementing the interpolation layers in a computationally efficient manner using known interpolation schemes.

In a further possible implementation form, the plurality of processing layers do not comprise any pooling layers and/or convolutional layers with a stride larger than 1 for down-sampling the data. Thus, in implementation forms, the pooling layers and/or convolutional layers with a stride larger than 1 are replaced by interpolation layers. More specifically, the plurality of processing layers may not comprise any max pooling layers, min pooling layers, mean pooling layers, average pooling layers and/or convolutional layers with a stride larger than 1 for down-sampling the data. In other words, the plurality of processing layers may be configured to down-sample the data using only the plurality of interpolation layers.

In a further possible implementation form, the plurality of processing layers comprise a global average pooling (GAP) layer. The GAP layer may immediately follow the last convolutional layer in the processing direction.

In a further possible implementation form, the plurality of processing layers comprise a fully connected (FC) layer. The FC layer may immediately follow the GAP layer in the processing direction.

In a further possible implementation form, for at least two interpolation layers of the plurality of interpolation layers, the difference between the number of data points in a predetermined spatial dimension of the respective input data array and the number of data points of the respective output data array in the predetermined spatial dimension is equal. For instance, a difference between the number of data points in a predetermined spatial dimension of an input data array of a first interpolation layer and the number of data points of an output data array of the first interpolation layer in the predetermined spatial dimension may be equal to a difference between the number of data points in the predetermined spatial dimension of an input data array of a second interpolation layer and the number of data points of an output data array of the second interpolation layer in the predetermined spatial dimension. The second interpolation layer may be the next interpolation layer after the first interpolation layer or further interpolation layers may be arranged between the first and the second interpolation layer. In an implementation form, this allows reducing a respective spatial dimension by a constant value from layer to layer (herein also referred to as "additive rule"). In other words, according to the "additive rule", there may be a constant differential (such as a differential of 2 or 5 data points) between the input data array and the respective output data array for a respective spatial dimension.

In a further possible implementation form, for at least two interpolation layers of the plurality of interpolation layers, the ratio between the number of data points in a predetermined spatial dimension of the respective input data array and the number of data points of the respective output data array in the predetermined spatial dimension is equal. For instance, a ratio between the number of data points in a predetermined spatial dimension of an input data array of a first interpolation layer and the number of data points of an output data array of the first interpolation layer in the predetermined spatial dimension may be equal to a ratio between the number of data points in the predetermined spatial dimension of an input data array of a second interpolation layer and the number of data points of an output data array of the second interpolation layer in the predetermined spatial dimension. The second interpolation layer may be the next interpolation layer after the first interpolation layer or further interpolation layers may be arranged between the first and the second interpolation layer. In an implementation form, this allows reducing a respective spatial dimension such that the ratio of the number of data points is constant from layer to layer (herein also referred to as "multiplicative rule"). In other words, according to the "multiplicative rule", there may be a constant ratio (such as a ratio of 1.5) between the input data array and the respective output data array for a respective spatial dimension. The multiplicative rule may provide a smaller mean than the down-sampling provided by down-sampling layers of conventional neural network architectures.

The number of data points $W_l$ in a predetermined spatial dimension of the output data array provided by an $l$-th interpolation layer of the plurality of interpolation layers is given by:

$$W_l = \left(W_f - W_i\right) \cdot \left(\frac{l}{l_{max}}\right)^{\alpha} + W_i,$$

wherein $W_f$ denotes a number of data points in the predetermined spatial dimension of the output data array provided by the last interpolation layer of the plurality of interpolation layers in processing order, $W_i$ denotes the number of data points in the predetermined spatial dimension of the input data array processed by a first interpolation layer of the plurality of interpolation layers in processing order, $l_{max}$ denotes the total number of interpolation layers and $\alpha$ denotes a parameter, where $0 < \alpha \leq 1$. Adjusting the parameter $\alpha$ allows adjusting between the additive rule and the multiplicative rule depending on the given computational task of the neural network.

The data comprises image and/or video data, wherein the respective output data array and the respective input data array are two-dimensional data arrays.

In a further possible implementation form, the data processing apparatus further comprises a camera configured to capture image and/or video data.

According to a second aspect, a data processing method is provided, comprising the step of down-sampling data using a plurality of interpolation layers of a plurality of processing layers of a neural network. Each interpolation layer of the plurality of interpolation layers determines a respective output data array based on a respective input data array using interpolation, wherein a spatial dimension of the respective output data array comprises less data points than the corresponding spatial dimension of the respective input data array.

In a further possible implementation form of the second aspect, the plurality of processing layers of the neural network further comprise a plurality of convolutional layers, wherein each interpolation layer of the plurality of interpolation layers immediately follows a respective convolutional layer of the plurality of convolutional layers.

In a further possible implementation form of the second aspect, the data is down-sampled without using pooling layers or convolutional layers, i.e. using interpolation layers only.

The data processing method according to the second aspect of the present disclosure can be performed by the data processing apparatus according to the first aspect of the present disclosure. Thus, further features of the data processing method according to the second aspect of the present disclosure result directly from the functionality of the data processing apparatus according to the first aspect of the present disclosure and its different implementation forms described above and below.

According to a third aspect, a computer program or a computer program product is provided, which comprises a non-transitory computer-readable storage medium carrying program code which causes a computer or a processor to perform the method according to the second aspect when the program code is executed by the computer or the processor.

The different aspects of the present disclosure can be implemented in software and/or hardware.

Details of one or more embodiments are set forth in the accompanying drawings and the description below. Other features, objects, and advantages will be apparent from the description, drawings, and claims.

BRIEF DESCRIPTION OF THE DRAWINGS

In the following, embodiments of the present disclosure are described in more detail with reference to the attached figures and drawings, in which:

Fig. 1 is a schematic diagram illustrating a data processing apparatus according to an embodiment implementing a neural network architecture according to an embodiment;

Fig. 2 is a schematic diagram illustrating aspects of a convolutional layer of a neural network architecture;

Figs. 3a-c are schematic diagrams illustrating aspects of different processing layers of a neural network architecture;

Figs. 4a and 4b are schematic diagrams illustrating aspects of different processing layers of a neural network architecture;

Fig. 5 is a schematic diagram illustrating aspects of a neural network architecture;

Fig. 6 is a schematic diagram illustrating aspects of an interpolation layer of a neural network architecture implemented by a data processing apparatus according to an embodiment;

Fig. 7 is a schematic diagram illustrating different processing layers of a neural network architecture;

Fig. 8 is a schematic diagram illustrating different processing layers of a neural network architecture implemented by a data processing apparatus according to an embodiment;

Figs. 9a-c show graphs illustrating the dependency of the feature width on the processing layer index, wherein Fig. 9a illustrates this dependency for a conventional neural network architecture, and Figs. 9b and 9c for a neural network architecture implemented by a data processing apparatus according to an embodiment;

Fig. 10 is a schematic graph illustrating the performance of a neural network architecture implemented by a data processing apparatus according to an embodiment;

Fig. 11 is a table illustrating the performance of a neural network architecture implemented by a data processing apparatus according to an embodiment in comparison with a conventional network architecture; and

Fig. 12 is a flow diagram illustrating a data processing method according to an embodiment.

In the following identical reference signs refer to identical or at least functionally equivalent features.

DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

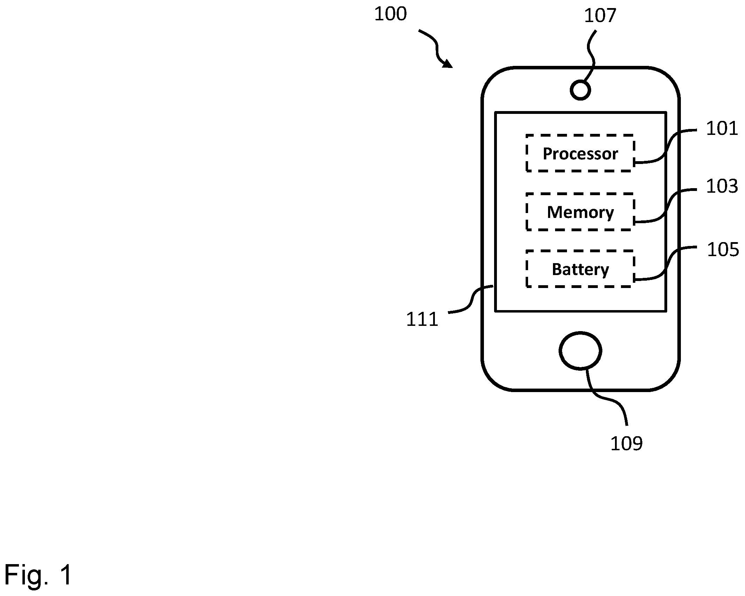

Figure 1 is schematic diagram illustrating a data processing apparatus 100 according to an embodiment. In the embodiment shown in Figure 1, the data processing apparatus 100, by way of example, is a smartphone 100, i.e. an electronic device 100 with reduced hardware capabilities with respect to computational power, memory storage and/or battery capacity. As illustrated in Figure 1, the smartphone 100 may comprise a processor 101 for processing data, a memory 103 for storing and retrieving data and a battery 105 for providing an energy supply. Moreover, the smartphone 100 may comprise a camera 107 for capturing image and/or video data, a user interface, such as a touch button 109 for allowing user interaction with the smartphone 100 and a display 111, e.g. a touch screen 111. Furthermore, the smartphone 100 may comprise a communication interface (not shown in figure 1), including, for instance, an antenna for exchanging data with other communication devices of a wireless communication network, such as a base station.

The processor 101 of the smartphone 100 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The memory 103 may store executable program code which, when executed by the processor 101, causes the smartphone 100 to perform the functions and methods described herein.

Generally, the data processing apparatus 100, e.g. a smartphone, comprises a processing circuitry, such as the processor 101 illustrated in Figure 1, that is configured to implement a neural network. As will be described in more detail below, the neural network comprises a plurality of processing layers for sequentially processing data, wherein, for down-sampling the data, the plurality of processing layers comprise a plurality of interpolation layers. Each interpolation layer is configured to process the data by determining a respective output data array based on a respective input data array using interpolation, wherein one or more spatial dimensions of the respective output data array comprise less data points than the corresponding spatial dimensions of the respective input data array.

Before describing exemplary embodiments of the data processing apparatus 100 in more detail, some background material about neural networks will be provided in the following. As will be appreciated, these aspects may be implemented in embodiments of the present disclosure as well, unless explicitly stated to the contrary. Although the description below will focus on neural networks for processing two-dimensional data, such as image data, the person skilled in the art will appreciate that the concepts described herein apply to neural networks for processing data with less or more than 2 dimensions as well.

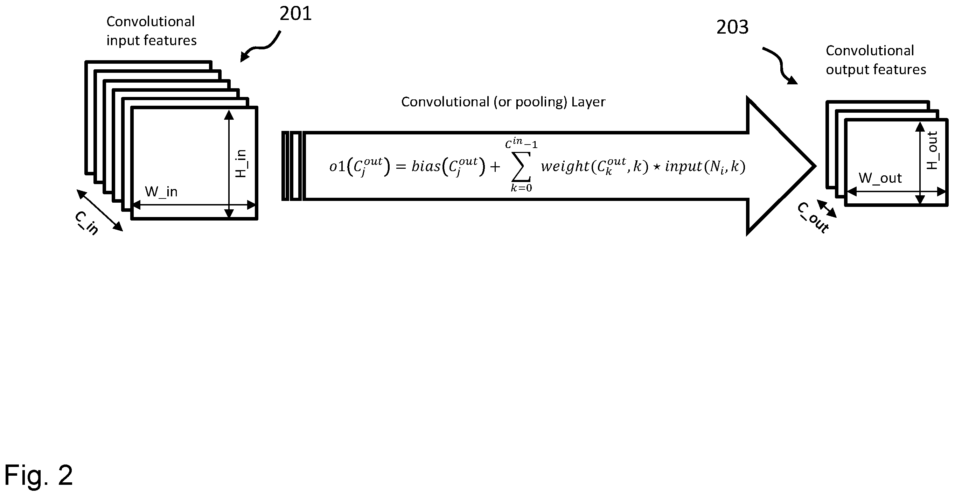

Neural Networks (NNs) are built from layers that process data, i.e. a plurality of processing layers. Often, the data passed between the processing layers is referred to as "activations" or "features". In the exemplary case that the data processed by a neural network is two-dimensional image data, convolutional features (CFs) are three-dimensional tensors with two spatial dimensions (height - H, width - W) and channels (C). RGB colors are an example of 3 channels. Figure 2 illustrates the down-sampling of data by a pooling layer or a convolutional layer with a stride greater than 1 for a plurality of input data arrays 201 (referred to as "Convolutional input features" in Figure 2) having dimensions W_in and H_in into a plurality of output data arrays 203 (referred to as "Convolutional output features" in Figure 2). As illustrated in Figure 2, the value of a data point of an output data array 203 may depend on a plurality of weighted data points of an input data array 201 and a bias. The channels of the output tensor are directly given by the layer parameter C_out.

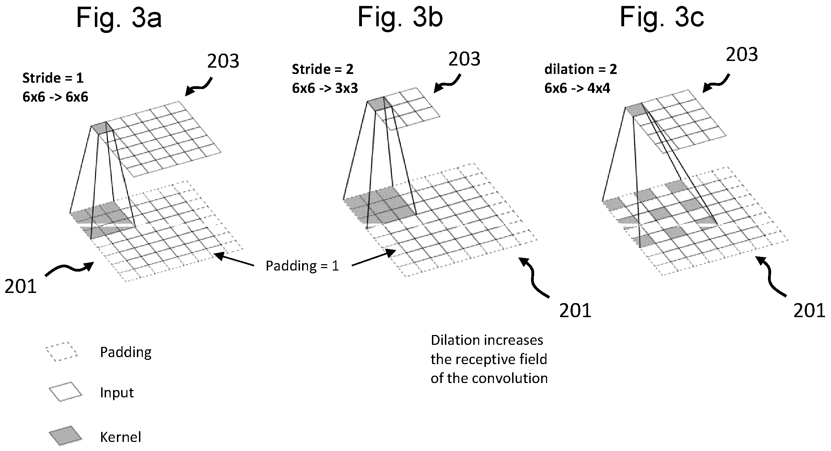

Figures 3a, 3b and 3c illustrate further examples for down-sampling data by convolutional and/or pooling layers of a neural network with padding, different strides, and/or different dilation factors. In the example shown in Figure 3a, a stride equal to 1 is used, thereby providing an output of a size 6x6. In the example shown in Figure 3b, a stride equal to 2 is used with an output of a size 3x3, i.e. a twofold reduction of the output size. Figure 3c shows a variant of the example shown in Figure 3b with a dilution equal to 2 providing an output of size 4x4.

As can be taken from the examples shown in Figures 2 and 3a-c, the spatial dimensions of the output tensor, i.e. the output data array 203, are indirectly defined by one or more layer parameters, such as a padding parameter, a dilation parameter, a kernel size parameter and the like. For instance, the output width and height, i.e. the spatial dimensions of the output data array may be defined by the following equations:

$$H_{out} = \left\lfloor \frac{H_{in} + 2 \times \text{padding}[0] - \text{dilation}[0] \times (\text{kernel\_size}[0] - 1) - 1}{\text{stride}[0]} + 1 \right\rfloor$$

$$W_{out} = \left\lfloor \frac{W_{in} + 2 \times \text{padding}[1] - \text{dilation}[1] \times (\text{kernel\_size}[1] - 1) - 1}{\text{stride}[1]} + 1 \right\rfloor$$

Here, the index "0" denotes the x-direction, while the index "1" denotes the y-direction.

In conventional neural network architectures, the parameters defining the spatial dimensions of the output data array 203, such as a padding parameter, a dilation parameter, and/or a kernel size parameter, are generally integers. For instance, the kernel size parameter may have a value of 1 or 3, the stride parameter a value of 2, and/or the padding parameter a value of 0 or 1 (other values for the kernel size parameter, the stride parameter, and the padding parameter are possible as well).

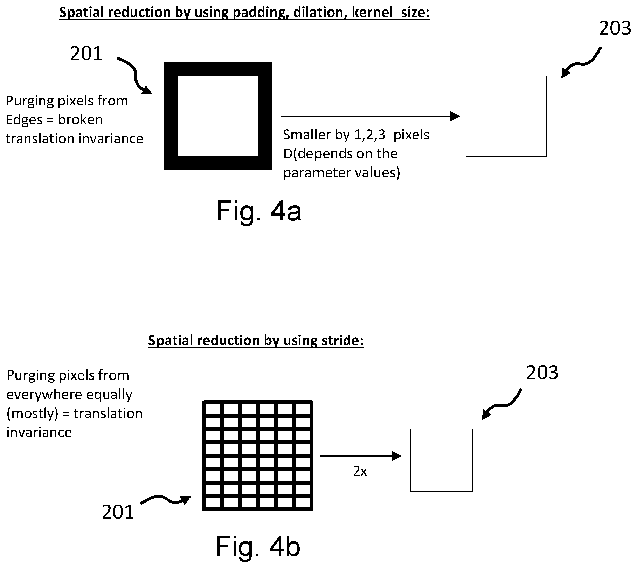

Further examples for reducing the spatial dimensions of the data array being processed, i.e. for down-sampling the data array, are shown in Figures 4a and 4b. Figure 4a illustrates down-sampling based on padding, dilation, and/or the kernel size. As can be taken from Figure 4a, however, using padding, dilation, and/or the kernel size for down-sampling breaks the translation invariance of the convolution operation, which is often undesirable. A down-sampling operation based on a convolutional layer with a stride larger than 1 is translationally invariant, as illustrated in Figure 4b for an exemplary stride equal to 2.

However, as already described above, the stride parameter is an integer so that the minimal spatial reduction, i.e. down-sampling provided by a convolutional layer with a stride equal to 2, is a twofold spatial reduction, i.e. a reduction with a factor of 2. Consequently, often in practice, only a few of such reductions, i.e. down-sampling operations, can be performed before the spatial dimensions of the data array being processed are smaller than the convolutional kernel (having a minimal size of 3 elements in a given dimension) to be applied by a subsequent convolutional layer. For instance, for data in form of an input image having 64x64 pixels, the data can be reduced, i.e. down-sampled no more than 4 times, namely from 64 pixels -> 32 pixels -> 16 pixels -> 8 pixels -> 4 pixels.

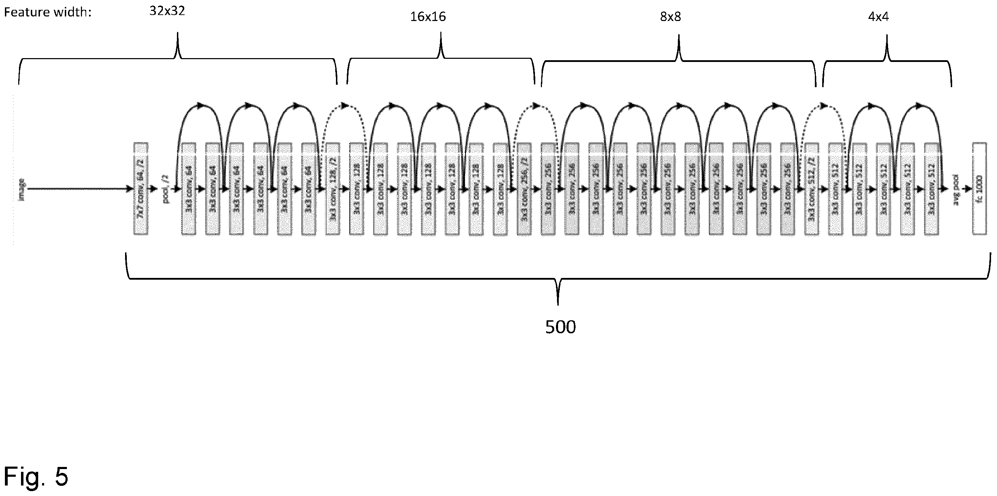

Neural networks often have very deep architectures, i.e. a lot of processing layers. For instance, neural networks based on the "ResNets" architecture may often contain more than several dozens of and sometimes up to thousands of convolutional layers. Due to the generally limited number of spatial reductions described above, this means that, in such a neural network, the spatial dimensions of the data being processed stays constant as it passes through large parts, i.e. processing layers of the neural network. This is illustrated in Figure 5 for the example of a neural network having a conventional ResNet-34 architecture.

For the reasons described above, conventional neural network architectures may lack flexibility when looking for a trade-off between computational efficiency expressed, for instance, as FLOPs on the one hand side and accuracy on the other hand side. Moreover, conventional neural network architectures have to deal with abrupt, step-like changes in spatial dimensions, which is bad for smoothly differentiable computations. Thus, conventional neural network architectures may provide sub-optimal solutions, where computational accuracy, latency, or power efficiency are unnecessarily sacrificed and not optimized. Although there have been some suggestions for neural network architectures for addressing these issues, such as using skip connections and different permutations of basic convolutional blocks, while varying the layer parameters mentioned above, these proposed architectures are computationally complex and, therefore, usually not suitable for electronic devices with limited hardware resources, such as the electronic device 100 shown in Figure 1.

To address these issues, embodiments of the present disclosure provide, as already described above, a data processing apparatus 100, such as the smartphone 100 illustrated in Figure 1, comprising a processing circuitry configured to implement a neural network having an advantageous neural network architecture (herein referred to as "spatio-pyramidal" neural network architecture). According to this "spatio-pyramidal" neural network architecture, the plurality of processing layers of the neural network comprise a plurality of interpolation layers for down-sampling the data. Each interpolation layer is configured to process the data by determining a respective output data array based on a respective input data array using interpolation, wherein one or more spatial dimensions of the respective output data array comprise less data points than the corresponding spatial dimensions of the respective input data array.

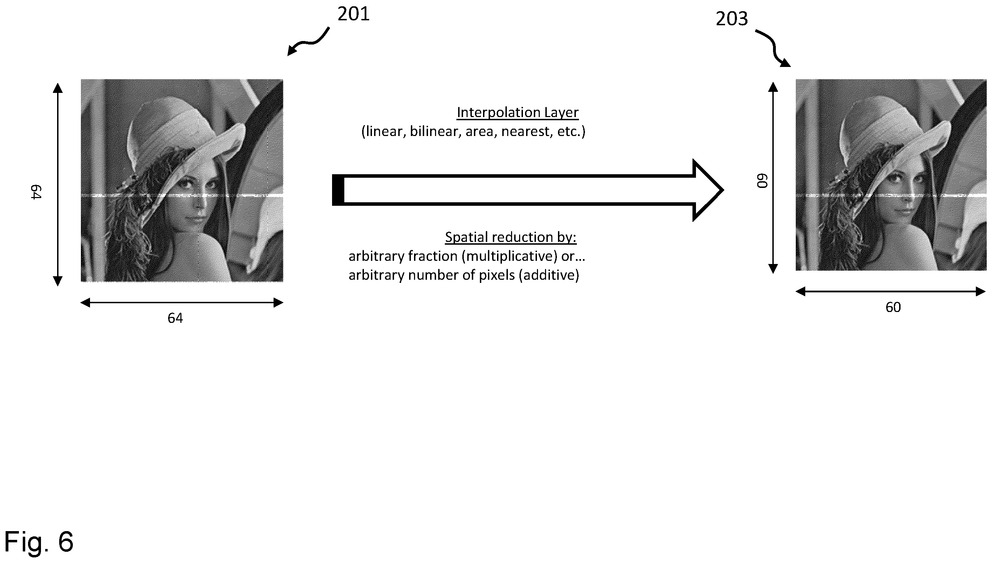

The down-sampling effect of an exemplary interpolation layer is illustrated in Figure 6. In this example, the interpolation layer processes, i.e. down-samples, the input data array 201 having 64x64 data points, i.e. pixels, into the output data array 203 having 60x60 data points. Thus, as will be appreciated from Figure 6, an interpolation layer of a neural network implemented by the data processing apparatus 100 enables "smaller" spatial reductions than, for instance, convolutional layers having a stride equal to 2. As illustrated in Figure 6, the interpolation performed by an interpolation layer of a neural network implemented by the data processing apparatus 100 may be based on one or more known interpolation schemes, such as a linear interpolation, a bilinear interpolation, a cubic interpolation, an area interpolation, and/or a nearest neighbour interpolation scheme.

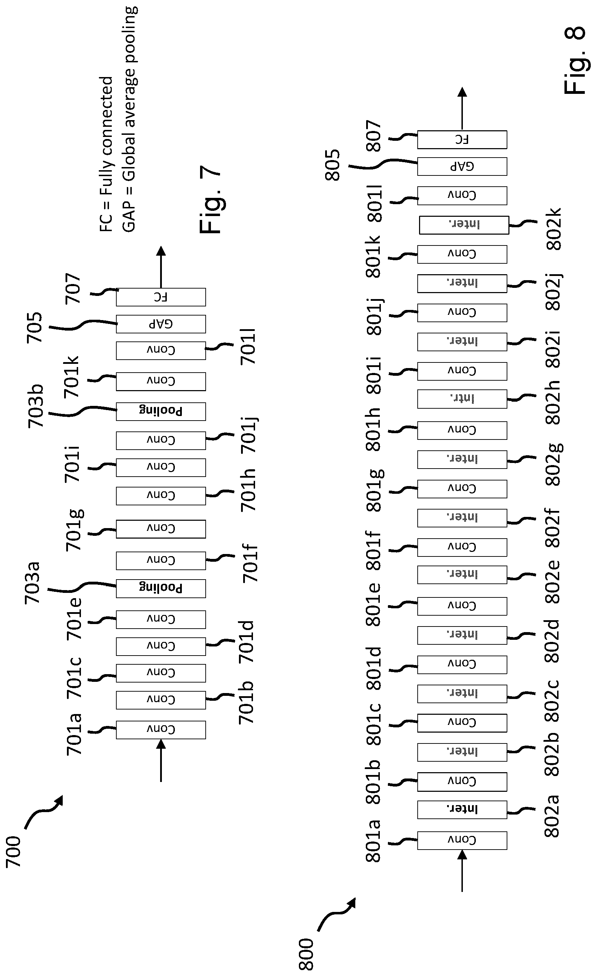

Referring to Figures 7 and 8, embodiments of the present invention allow replacing processing layers conventionally used for down-sampling, such as pooling layers, in particular maximum, minimum, average or mean pooling layers, or convolutional layers with a stride larger than 1, with interpolation layers.

Figure 7 illustrates a conventional network architecture. The neural network architecture illustrated in Figure 7 comprises a plurality of processing layers 700, including a plurality of convolutional layers 701a-k having a stride equal to 1 and a plurality of pooling layers 703a, b for down-sampling data. Moreover, the plurality of processing layers 700 may comprise at the end of the processing chain a global average pooling (GAP) layer 705 and a fully connected (FC) layer 707.

Figure 8 illustrates a neural network architecture implemented by the data processing apparatus 100 according to an embodiment. The neural network architecture illustrated in Figure 8 comprises a plurality of processing layers 800. Like the neural network architecture illustrated in Figure 7, the plurality of processing layers 800 may comprise a plurality of convolutional layers 801a-k having a stride equal to 1. For down-sampling, however, the plurality of processing layers 800 comprise a plurality of interpolation layers 802a-k, instead of the pooling layers illustrated in Figure 7. As will be appreciated, in the embodiment shown in Figure 8, a respective interpolation layer 802a-k may follow directly after a respective convolutional layer 801a-k. Moreover, the plurality of processing layers 800 may comprise at the end of the processing chain a global average pooling (GAP) layer 805 and a fully connected (FC) layer 807.

In an embodiment, for at least two of the plurality of interpolation layers 802a-k, the difference between the number of data points in a given spatial dimension of the respective input data array 201 and the number of data points of the respective output data array 203 in the given spatial dimension is equal. In an embodiment, this allows reducing a respective spatial dimension by a constant value from layer to layer (herein also referred to as "additive rule"). In other words, according to the "additive rule" there may be a constant differential (such as a differential of 2 or 5 data points or pixels) between the input data array 201 and the respective output data array 203 for a respective spatial dimension.

In a further embodiment, for at least two of the plurality of interpolation layers 802a-k, the ratio between the number of data points in a given spatial dimension of the respective input data array 201 and the number of data points of the respective output data array 203 in the given spatial dimension is equal. In an embodiment, this allows reducing a respective spatial dimension such that the ratio of the number of data points, e.g. pixels is constant from layer to layer (herein also referred to as "multiplicative rule"). In other words, according to the "multiplicative rule", there may be a constant ratio (such as a ratio of 1.5) between the number of data points, e.g. pixels of the input data array 201 and the number of data points, e.g. pixels of the respective output data array 203 for a respective spatial dimension.

In a further embodiment, the number of data points $W_l$ in a given spatial dimension of the output data array 203 provided by the $l$-th interpolation layer 8021 is given by:

$$W_l = \left(W_f - W_i\right) \cdot \left(\frac{l}{l_{max}}\right)^{\alpha} + W_i,$$

wherein $W_f$ denotes the number of data points in the given spatial dimension of the output data array 203 provided by the last interpolation layer in processing order, $W_i$ denotes the number of data points in the given spatial dimension of the input data array 201 processed by the first interpolation layer 802a in processing order, $l_{max}$ denotes the total number of interpolation layers and $\alpha$ denotes a parameter in the range $0 < \alpha \leq 1$. Adjusting the parameter $\alpha$ allows adjusting between the additive rule and the multiplicative rule depending on the given computational task of the neural network.

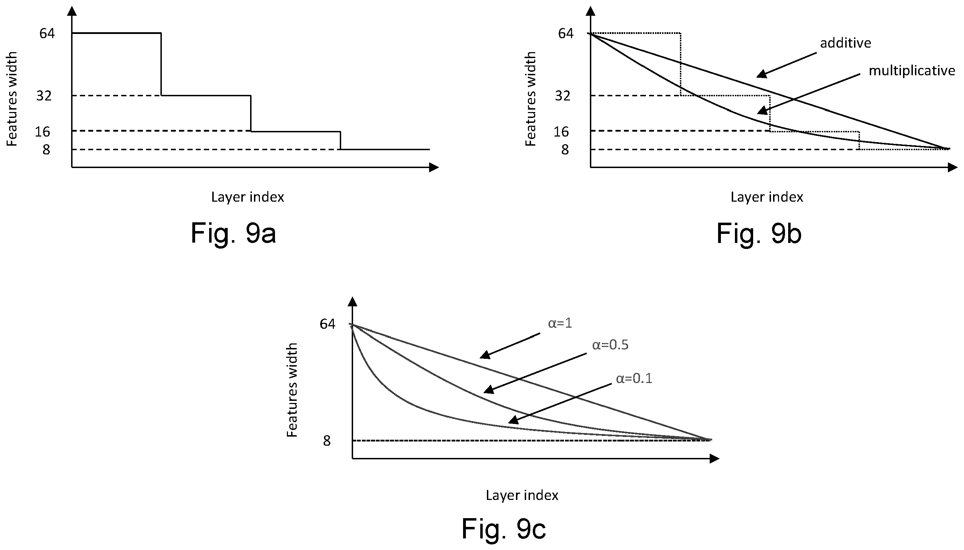

As already described in the context of Figure 6 above, the "spatio-pyramidal" neural network architecture illustrated in Figure 8 enables a continuous reduction of the spatial dimensions of the data, i.e. features. This will be described in the following in more detail in the context of Figures 9a-c, which show graphs illustrating the dependency of the feature width, i.e. the spatial dimensions of the data on the processing layer index. While Figure 9a illustrates this dependency for a conventional neural network architecture, Figures 9b and 9c illustrate the dependency of the feature width, i.e. the spatial dimensions of the data on the processing layer index for the "spatio-pyramidal" neural network architecture implemented by the data processing apparatus 100.

As will be appreciated, the "spatio-pyramidal" neural network architecture implemented by the data processing apparatus 100 provides a much smoother dependency of the of the feature width, i.e. the spatial dimensions of the data on the processing layer index (illustrated in Figures 9b for the "additive rule" and the "multiplicative rule" and in Figure 9c for different choices of the parameter $\alpha$) than the step-like dependency illustrated in Figure 9a.

Although the "spatio-pyramidal" neural network architecture illustrated in Figure 8 comprises more processing layers than the neural network architecture illustrated in Figure 7, the interpolation layers 802a-k are less demanding with respect to the computational resources of the data processing apparatus 100 than the pooling layers 703a, b of the neural network architecture illustrated in Figure 7.

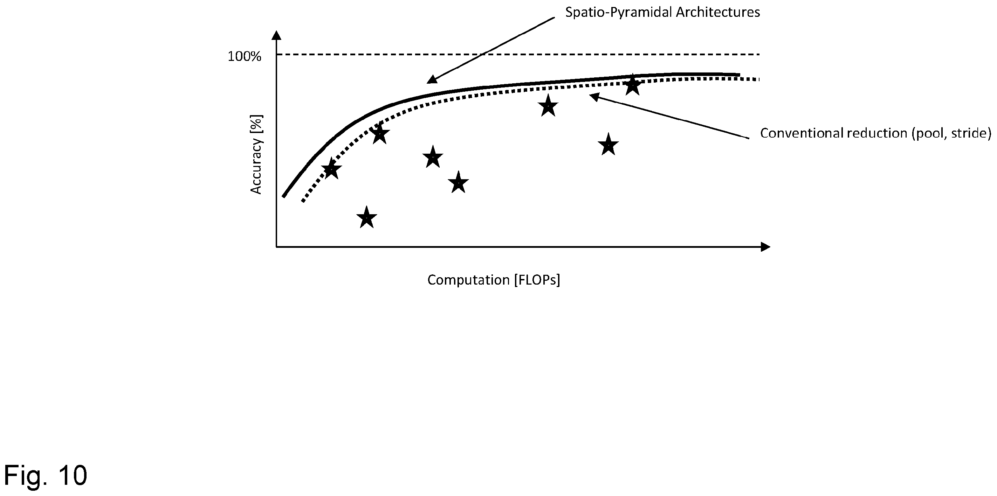

By adding many interpolation layers 802a-k, possibly after every convolutional layer 801a-k, embodiments of the present disclosure allow achieving the required computational accuracy, while using minimum memory and computational resources. More specifically, embodiments allow improving on the Pareto curve, which describes the maximum achievable accuracy as a function of computational complexity measures, for instance, in FLOPs, and which is illustrated in Figure 10. In addition to computational complexity, the Pareto curve describing the maximum achievable accuracy may depend on the memory size, the processing latency as well as power (and these may all be correlated to some degree). As can be taken from Figure 10, the "spatio-pyramidal" neural network architecture implemented by the data processing apparatus 100 provides an improved accuracy, especially in the ultra-low FLOPs region. Thus, the "spatio-pyramidal" neural network architecture is advantageous in particular for electronic devices with limited or reduced hardware capabilities, such as smartphones or other types of IoT devices.

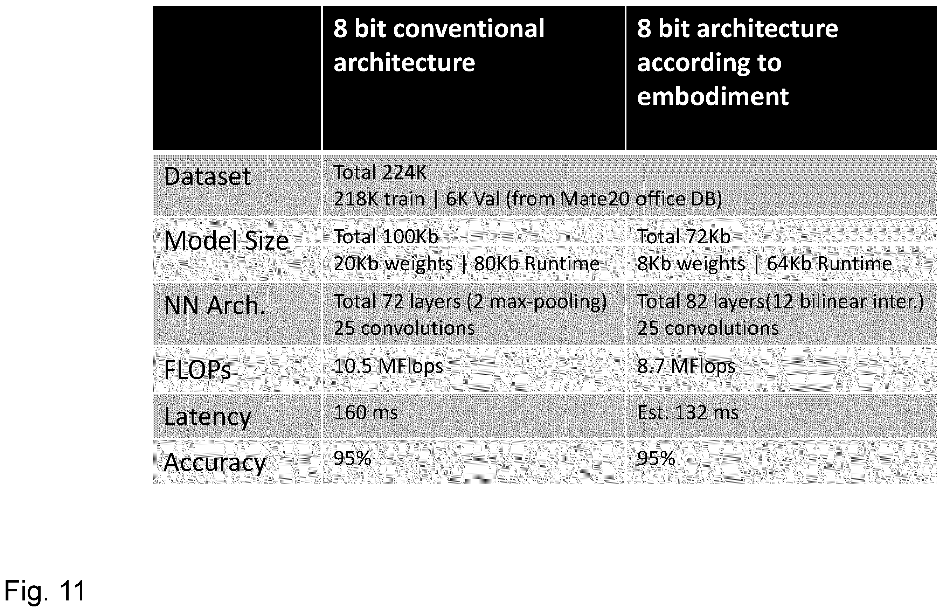

Figure 11 is a table comparing performance of a conventional neural network architecture and the "spatio-pyramidal" neural network architecture implemented by the data processing apparatus 100 according to an embodiment of the present disclosure. In this example, a respective face detection model was implemented on the one hand side by a conventional fully preactivated ResNet20 with depth-wise convolutions and bottleneck blocks with a pyramidal-channels architecture and on the other hand side the "spatio-pyramidal" neural network architecture implemented by the data processing apparatus 100 according to an embodiment of the present disclosure. As can be taken from the table shown in Figure 11, for this example, the "spatio-pyramidal" neural network architecture implemented by the data processing apparatus 100 is computationally less demanding (-17% of FLOPs), has a better latency (-17.5%) and has a better footprint (-28% of model size) without sacrificing accuracy. Consequently, the "spatio-pyramidal" neural network architecture implemented by the data processing apparatus 100 is better suited for electronic devices with limited or reduced hardware capabilities, such as smartphone or other types of IoT devices.

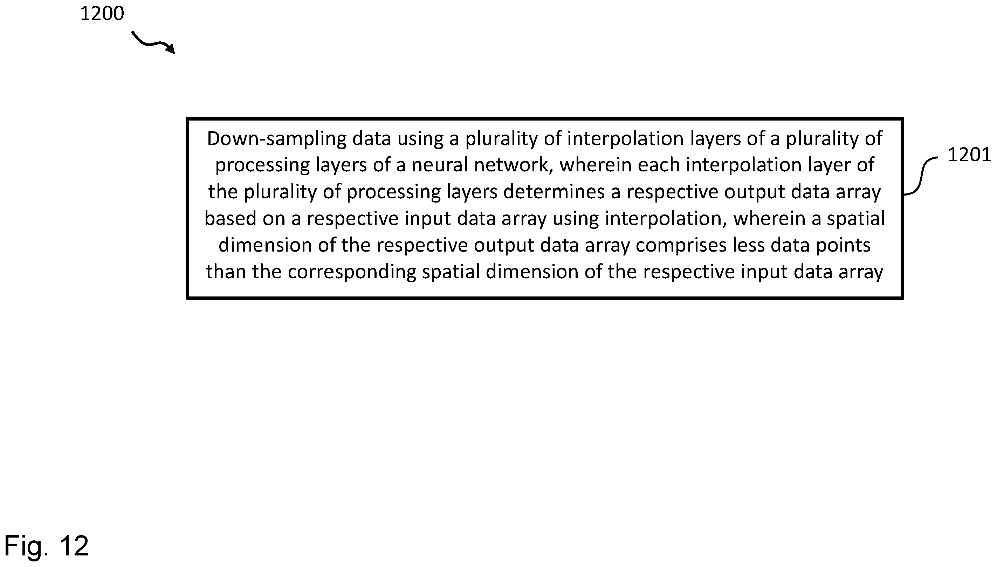

Figure 12 is a flow diagram of a corresponding data processing method 1200. The data processing method 1200 comprises the step 1201 of down-sampling data using a plurality of interpolation layers 802a-k of a plurality of processing layers 800 of a neural network, wherein each interpolation layer 802a-k determines a respective output data array 203 based on a respective input data array 201 using interpolation. As described above, one or more spatial dimensions of the respective output data array 203 comprise less data points than the corresponding spatial dimensions of the respective input data array 201.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

**Claims**

**1.** A data processing apparatus (100), comprising:

processing circuitry (101) configured to implement a neural network, wherein the neural network comprises a plurality of processing layers (800) for sequentially processing data, wherein the data comprises images and/or video data,

wherein, for down-sampling the data, the plurality of processing layers (800) comprise a plurality of interpolation layers (802a-k), wherein each interpolation layer of the plurality of interpolation layers (802a-k) is configured to process the data by determining a respective output data array (203) based on a respective input data array (201) using interpolation, wherein a spatial dimension of the respective output data array (203) comprises less data points than the corresponding spatial dimension of the respective input data array (201);

wherein a number of data points $W_l$ in a predetermined spatial dimension of the output data array (203) provided by an $l$-th interpolation layer of the plurality of interpolation layers (802a-k) is given by:

$$W_l = \left(W_f - W_i\right) \cdot \left(\frac{l}{l_{max}}\right)^{\alpha} + W_i,$$

wherein $W_f$ denotes a number of data points in the predetermined spatial dimension of the output data array (203) provided by a last interpolation layer (802k) of the plurality of interpolation layers (802a-k), $W_i$ denotes a number of data points in the predetermined spatial dimension of the input data array (201) processed by a first interpolation layer (802a) of the plurality of interpolation layers (802a-k), $l_{max}$ denotes a total number of interpolation layers (802a-k), and $\alpha$ denotes a parameter, where $0 < \alpha \leq 1$.

2. The data processing apparatus (100) of claim 1, wherein the plurality of processing layers (800) of the neural network further comprise a plurality of convolutional layers (801a-l), and wherein each interpolation layer of the plurality of interpolation layers (802a-k) follows a respective convolutional layer of the plurality of convolutional layers (801a-l).

3. The data processing apparatus (100) of claim 1 or 2, wherein each interpolation layer of the plurality of interpolation layers (802a-k) is configured to process the respective input data array (201) into the respective output data array (203) by interpolating the data of the respective input data array (201) using at least one of a linear interpolation, a bilinear interpolation, a cubic interpolation, an area interpolation, and a nearest neighbour interpolation.

4. The data processing apparatus (100) of any one of the preceding claims, wherein the plurality of processing layers (800) are configured to down-sample the data without using pooling layers or convolutional layers.

5. The data processing apparatus (100) of any one of the preceding claims, wherein the plurality of processing layers (800) comprise a global average pooling layer (805).

6. The data processing apparatus (100) of any one of the preceding claims, wherein the plurality of processing layers (800) comprise a fully connected layer (807).

7. The data processing apparatus (100) of any one of the preceding claims, wherein, for at least two interpolation layers of the plurality of interpolation layers (802a-k), a difference between a number of data points in a predetermined spatial dimension of the respective input data array (201) and a number of data points of the respective output data array (203) in the predetermined spatial dimension is equal.

8. The data processing apparatus (100) of any one of the preceding claims, wherein, for at least two interpolation layers of the plurality of interpolation layers (802a-k), a ratio between a number of data points in a predetermined spatial dimension of the respective input data array (201) and a number of data points of the respective output data array (203) in the predetermined spatial dimension is equal.

9. The data processing apparatus (100) of any one of the preceding claims, wherein the data comprises image and/or video data, and wherein the respective output data array (203) and the respective input data array (201) are two-dimensional data arrays.

10. The data processing apparatus (100) of any one of the preceding claims, further comprising a camera (107) configured to capture image and/or video data.

11. A computer-implemented data processing method (1200), comprising:

down-sampling (1201) data using a plurality of interpolation layers (802a-k) of a plurality of processing layers (800) of a neural network, wherein the data comprises images and/or video data, wherein each interpolation layer of the plurality of interpolation layers (802a-k) determines a respective output data array (203) based on a respective input data array (201) using interpolation, wherein a spatial dimension of the respective output data array (203) comprises less data points than the corresponding spatial dimension of the respective input data array (201);

wherein a number of data points $W_l$ in a predetermined spatial dimension of the output data array (203) provided by an $l$-th interpolation layer of the plurality of interpolation layers (802a-k) is given by:

$$W_l = \left(W_f - W_i\right) \cdot \left(\frac{l}{l_{max}}\right)^{\alpha} + W_i,$$

wherein $W_f$ denotes a number of data points in the predetermined spatial dimension of the output data array (203) provided by a last interpolation layer (802k) of the plurality of interpolation layers (802a-k), $W_i$ denotes a number of data points in the predetermined spatial dimension of the input data array (201) processed by a first interpolation layer (802a) of the plurality of interpolation layers (802a-k), $l_{max}$ denotes a total number of interpolation layers (802a-k), and $\alpha$ denotes a parameter, where $0 < \alpha \leq 1$.

12. The computer-implemented data processing method (1200) of claim 11, wherein the plurality of processing layers (800) of the neural network further comprise a plurality of convolutional layers (801a-l), and wherein each interpolation layer of the plurality of interpolation layers (802a-k) follows a respective convolutional layer of the plurality of convolutional layers (801a-l).

13. The computer-implemented data processing method (1200) of claim 11 or 12, wherein the data is down-sampled without using pooling layers or convolutional layers.

14. A computer program product comprising a non-transitory computer-readable storage medium for storing program code which causes a computer or a processor to perform the computer-implemented data processing method (1200) of any one of claims 11 to 13 when the program code is executed by the computer or the processor.

## Patentansprüche

1. Datenverarbeitungseinrichtung (100), die umfasst:

Verarbeitungsschaltlogik (101), die konfiguriert ist, um ein neuronales Netz zu implementieren, wobei das neuronale Netz eine Vielzahl von Verarbeitungsschichten (800) zum sequenziellen Verarbeiten von Daten umfasst, wobei die Daten Bilder und/oder Videodaten umfassen,

wobei, zum Downsampling der Daten, die Vielzahl von Verarbeitungsschichten (800) eine Vielzahl von Interpolationsschichten (802a-k) umfasst, wobei jede Interpolationsschicht der Vielzahl von Interpolationsschichten (802a-k) konfiguriert ist, um die Daten durch Bestimmen eines jeweiligen Ausgangsdatenfeldes (203) basierend auf einem jeweiligen Eingangsdatenfeld (201) unter Verwendung von Interpolation zu verarbeiten, wobei eine räumliche Dimension des jeweiligen Ausgangsdatenfeldes (203) weniger Datenpunkte als die entsprechende räumliche Dimension des jeweiligen Eingangsdatenfeldes (201) umfasst;

wobei eine Anzahl von Datenpunkten $W_l$ in einer vorbestimmten räumlichen Dimension des Ausgangsdatenfeldes (203), das durch eine $l$-te Interpolationsschicht der Vielzahl von Interpolationsschichten (802a-k) bereitgestellt wird, gegeben ist durch:

$$W_l = \left(W_f - W_i\right) \cdot \left(\frac{l}{l_{max}}\right)^{\alpha} + W_i,$$

wobei $W_f$ eine Anzahl von Datenpunkten in der vorbestimmten räumlichen Dimension des Ausgangsdatenfeldes (203), das durch die letzte Interpolationsschicht (802k) der Vielzahl von Interpolationsschichten (802a-k) bereitgestellt wird, bezeichnet, $W_i$ eine Anzahl von Datenpunkten in der vorbestimmten räumlichen Dimension des Eingangsdatenfeldes (201), das durch die erste Interpolationsschicht (802a) der Vielzahl von Interpolationsschichten (802a-k) verarbeitet wird, bezeichnet, $l_{max}$ eine Gesamtzahl der Interpolationsschichten (802a-k) bezeichnet und $\alpha$ einen Parameter bezeichnet, wobei

$$0 < \alpha \leq 1.$$

2. Datenverarbeitungseinrichtung (100) nach Anspruch 1, wobei die Vielzahl von Verarbeitungsschichten (800) des neuronalen Netzes ferner eine Vielzahl von Faltungsschichten (801a-l) umfasst und wobei jede Interpolationsschicht der Vielzahl von Interpolationsschichten (802a-k) auf eine jeweilige Faltungsschicht der Vielzahl von Faltungsschichten (801a-l) folgt.

3. Datenverarbeitungseinrichtung (100) nach Anspruch 1 oder 2, wobei jede Interpolationsschicht der Vielzahl von Interpolationsschichten (802a-k) konfiguriert ist, um das jeweilige Eingangsdatenfeld (201) zu dem jeweiligen Ausgangsdatenfeld (203) durch Interpolieren der Daten des jeweiligen Eingangsdatenfeldes (201) unter Verwendung mindestens einer von einer linearen Interpolation, einer bilinearen Interpolation, einer kubischen Interpolation, einer Flächeninterpolation und einer Nächste-Nachbar-Interpolation zu verarbeiten.

4. Datenverarbeitungseinrichtung (100) nach einem der vorstehenden Ansprüche, wobei die Vielzahl von Verarbeitungsschichten (800) konfiguriert ist, um ein Downsampling der Daten durchzuführen, ohne Pooling-Schichten oder Faltungsschichten zu verwenden.

5. Datenverarbeitungseinrichtung (100) nach einem der vorstehenden Ansprüche, wobei die Vielzahl von Verarbeitungsschichten (800) eine Global-Average-Pooling-Schicht (805) umfasst.

6. Datenverarbeitungseinrichtung (100) nach einem der vorstehenden Ansprüche, wobei die Vielzahl von Verarbeitungsschichten (800) eine vollständig verbundene Schicht (807) umfasst.

7. Datenverarbeitungseinrichtung (100) nach einem der vorstehenden Ansprüche, wobei für mindestens zwei Interpolationsschichten der Vielzahl von Interpolationsschichten (802a-k) eine Differenz zwischen einer Anzahl von Datenpunkten in einer vorbestimmten räumlichen Dimension des jeweiligen Eingangsdatenfeldes (201) und einer Anzahl von Datenpunkten des jeweiligen Ausgangsdatenfeldes (203) in der vorbestimmten räumlichen Dimension gleich ist.

8. Datenverarbeitungseinrichtung (100) nach einem der vorstehenden Ansprüche, wobei für mindestens zwei Interpolationsschichten der Vielzahl von Interpolationsschichten (802a-k) ein Verhältnis zwischen einer Anzahl von Datenpunkten in einer vorbestimmten räumlichen Dimension des jeweiligen Eingangsdatenfeldes (201) und einer Anzahl von Datenpunkten des jeweiligen Ausgangsdatenfeldes (203) in der vorbestimmten räumlichen Dimension gleich ist.

9. Datenverarbeitungseinrichtung (100) nach einem der vorstehenden Ansprüche, wobei die Daten Bild- und/oder Videodaten umfassen und wobei das jeweilige Ausgangsdatenfeld (203) und das jeweilige Eingangsdatenfeld (201) zweidimensionale Datenfelder sind.

10. Datenverarbeitungseinrichtung (100) nach einem der vorstehenden Ansprüche, die ferner eine Kamera (107) umfasst, die konfiguriert ist, um Bild- und/oder Videodaten aufzunehmen.

11. Computerimplementiertes Bildverarbeitungsverfahren (1200), das umfasst:

Downsampling (1201) von Daten unter Verwendung einer Vielzahl von Interpolationsschichten (802a-k) einer Vielzahl von Verarbeitungsschichten (800) eines neuronalen Netzes, wobei die Daten Bilder und/oder Videodaten umfassen,
wobei jede Interpolationsschicht der Vielzahl von Interpolationsschichten (802a-k) basierend auf einem jeweiligen Eingangsdatenfeld (201) unter Verwendung von Interpolation ein jeweiliges Ausgangsdatenfeld (203) bestimmt, wobei eine räumliche Dimension des jeweiligen Ausgangsdatenfeldes (203) weniger Datenpunkte als die entsprechende räumliche Dimension des jeweiligen Eingangsdatenfeldes (201) umfasst;
wobei eine Anzahl von Datenpunkten $W_l$ in einer vorbestimmten räumlichen Dimension des Ausgangsdatenfeldes (203), das durch eine $l$-te Interpolationsschicht der Vielzahl von Interpolationsschichten (802a-k) bereitgestellt wird, gegeben ist durch:

$$W_l = \left(W_f - W_i\right) \cdot \left(\frac{l}{l_{max}}\right)^{\alpha} + W_i,$$

wobei $W_f$ eine Anzahl von Datenpunkten in der vorbestimmten räumlichen Dimension des Ausgangsdatenfeldes (203), das durch die letzte Interpolationsschicht (802k) der Vielzahl von Interpolationsschichten (802a-k) bereitgestellt wird, bezeichnet, $W_i$ eine Anzahl von Datenpunkten in der vorbestimmten räumlichen Dimension des Eingangsdatenfeldes (201), das durch die erste Interpolationsschicht (802a) der Vielzahl von Interpolationsschichten (802a-k) verarbeitet wird, bezeichnet, $l_{max}$ eine Gesamtzahl der Interpolationsschichten (802a-k) bezeichnet und $\alpha$ einen Parameter bezeichnet, wobei $0 < \alpha \leq 1$.

12. Computerimplementiertes Datenverarbeitungsverfahren (1200) nach Anspruch 11, wobei die Vielzahl von Verarbeitungsschichten (800) des neuronalen Netzes ferner eine Vielzahl von Faltungsschichten (801a-l) umfasst und wobei jede Interpolationsschicht der Vielzahl von Interpolationsschichten (802a-k) auf eine jeweilige Faltungsschicht der Vielzahl von Faltungsschichten (801a-l) folgt.

13. Computerimplementiertes Datenverarbeitungsverfahren (1200) nach Anspruch 11 oder 12, wobei das Downsampling der Daten ohne Verwendung von Pooling-Schichten oder Faltungsschichten erfolgt.

14. Computerprogrammprodukt, das ein nicht-transitorisches computerlesbares Speicherungsmedium zum Speichern von Programmcode umfasst, der einen Computer oder einen Prozessor veranlasst, das computerimplementierte Datenverarbeitungsverfahren (1200) nach einem der Ansprüche 11 bis 13 durchzuführen, wenn der Programmcode durch den Computer oder den Prozessor ausgeführt wird.

## Revendications

1. Appareil de traitement de données (100), comprenant :

une circuiterie de traitement (101) configurée pour mettre en œuvre un réseau neuronal, dans lequel le réseau neuronal comprend une pluralité de couches de traitement (800) pour le traitement de manière séquentielle de données, dans lequel les données comprennent des données d'images et/ou de vidéo,
dans lequel, pour le sous-échantillonnage des données, la pluralité de couches de traitement (800) comprennent une pluralité de couches d'interpolation (802a-k), dans lequel chaque couche d'interpolation de la pluralité de couches d'interpolation (802a-k) est configurée pour traiter les données en déterminant un réseau de données de sortie (203) respectif sur la base d'un réseau de données d'entrée (201) respectif à l'aide d'une interpolation, dans lequel une dimension spatiale du réseau de données de sortie (203) respectif comprend moins de points de données que la dimension spatiale correspondante du réseau de données d'entrée (201) respectif ;
dans lequel un certain nombre de points de données $W_l$ dans une dimension spatiale prédéterminée du réseau de données de sortie (203) fourni par une $l$ième couche d'interpolation de la pluralité de couches d'interpolation (802a-k) est donné par :

$$W_l = \left(W_f - W_i\right) \cdot \left(\frac{l}{l_{max}}\right)^{\alpha} + W_i,$$

où $W_f$ représente un nombre de points de données dans la dimension spatiale prédéterminée du réseau de données de sortie (203) fourni par une dernière couche d'interpolation (802k) de la pluralité de couches d'interpolation (802a-k), $W_i$ représente un nombre de points de données dans la dimension spatiale prédéterminée du réseau de données d'entrée (201) traité par une première couche d'interpolation (802a) de la pluralité de couches d'interpolation (802a-k), $l_{max}$ représente un nombre total de couches d'interpolation (802a-k), et a représente un paramètre, où $0 < \alpha \leq 1$.

2. Appareil de traitement de données (100) selon la revendication 1, dans lequel la pluralité de couches de traitement (800) du réseau neuronal comprennent en outre une pluralité de couches de convolution (801 a-l), et dans lequel chaque couche d'interpolation de la pluralité de couches d'interpolation (802a-k) suit une couche de convolution respective de la pluralité de couches de convolution (801 a-l).

3. Appareil de traitement de données (100) selon la revendication 1 ou 2, dans lequel chaque couche d'interpolation de la pluralité de couches d'interpolation (802a-k) est configurée pour traiter le réseau de données d'entrée (201) respectif dans le réseau de données de sortie (203) respectif en interpolant les données du réseau de données d'entrée (201) respectif à l'aide d'au moins l'une parmi une interpolation linéaire, une interpolation bilinéaire, une interpolation cubique, une interpolation de zone, et une interpolation au plus proche voisin.

4.  Appareil de traitement de données (100) selon l'une quelconque des revendications précédentes, dans lequel la pluralité de couches de traitement (800) sont configurées pour sous-échantillonner les données sans utiliser de couches de regroupement ou de couches de convolution.

5.  Appareil de traitement de données (100) selon l'une quelconque des revendications précédentes, dans lequel la pluralité de couches de traitement (800) comprennent une couche de regroupement de la moyenne globale (805).

6.  Appareil de traitement de données (100) selon l'une quelconque des revendications précédentes, dans lequel la pluralité de couches de traitement (800) comprennent une couche entièrement connectée (807).

7.  Appareil de traitement de données (100) selon l'une quelconque des revendications précédentes, dans lequel, pour au moins deux couches d'interpolation de la pluralité de couches d'interpolation (802a- k), une différence entre un nombre de points de données dans une dimension spatiale prédéterminée du réseau de données d'entrée (201) respectif et un nombre de points de données du réseau de données de sortie (203) respectif dans la dimension spatiale prédéterminée est égale.

8.  Appareil de traitement de données (100) selon l'une quelconque des revendications précédentes, dans lequel, pour au moins deux couches d'interpolation de la pluralité de couches d'interpolation (802a-k), un rapport entre un nombre de points de données dans une dimension spatiale prédéterminée du réseau de données d'entrée (201) respectif et un nombre de points de données du réseau de données de sortie (203) respectif dans la dimension spatiale prédéterminée est égal.

9.  Appareil de traitement de données (100) selon l'une quelconque des revendications précédentes, dans lequel les données comprennent des données d'image et/ou de vidéo, et dans lequel le réseau de données de sortie (203) respectif et le réseau de données d'entrée (201) respectif sont des réseaux de données bidimensionnels.

10. Appareil de traitement de données (100) selon l'une quelconque des revendications précédentes, comprenant en outre une caméra (107) configurée pour capturer des données d'image et/ou de vidéo.

11. Procédé de traitement de données mis en œuvre par ordinateur (1200), comprenant :

    le sous-échantillonnage (1201) de données à l'aide d'une pluralité de couches d'interpolation (802a-k) d'une pluralité de couches de traitement (800) d'un réseau neuronal, dans lequel les données comprennent des données d'images et/ou de vidéo,
    dans lequel chaque couche d'interpolation de la pluralité de couches d'interpolation (802a-k) détermine un réseau de données de sortie (203) respectif sur la base d'un réseau de données d'entrée (201) respectif à l'aide d'une interpolation, dans lequel une dimension spatiale du réseau de données de sortie (203) respectif comprend moins de points de données que la dimension spatiale correspondante du réseau de données d'entrée (201) respectif ;
    dans lequel un certain nombre de points de données $W_l$ dans une dimension spatiale prédéterminée du réseau de données de sortie (203) fourni par une $l$ième couche d'interpolation de la pluralité de couches d'interpolation (802a-k) est donné par :

$$W_l = \left( W_f - W_i \right) \cdot \left( \frac{l}{l_{max}} \right)^{\alpha} + W_i,$$

    où $W_f$ représente un nombre de points de données dans la dimension spatiale prédéterminée du réseau de données de sortie (203) fourni par une dernière couche d'interpolation (802k) de la pluralité de couches d'interpolation (802a-k), $W_i$ représente un nombre de points de données dans la dimension spatiale prédéterminée du réseau de données d'entrée (201) traité par une première couche d'interpolation (802a) de la pluralité de couches d'interpolation (802a-k), $l_{max}$ représente un nombre total de couches d'interpolation (802a-k), et a représente un paramètre, où $0 < \alpha \le 1$.

12. Procédé de traitement de données mis en œuvre par ordinateur (1200) selon la revendication 11, dans lequel la pluralité de couches de traitement (800) du réseau neuronal comprennent en outre une pluralité de couches de convolution (801a-l), et dans lequel chaque couche d'interpolation de la pluralité de couches d'interpolation (802a-k) suit une couche de convolution respective de la pluralité de couches de convolution (801a-l).

13. Procédé de traitement de données mis en œuvre par ordinateur (1200) selon la revendication 11 ou 12, dans lequel les données sont sous-échantillonnées sans utiliser de couches de regroupement ou de couches de convolution.

14. Produit-programme informatique comprenant un support de stockage non transitoire lisible par ordinateur pour le stockage d'un code de programme qui amène un ordinateur ou un processeur à réaliser le procédé de traitement de données mis en œuvre par ordinateur (1200) selon l'une quelconque des revendications 11 à 13 lorsque le code de programme est exécuté par l'ordinateur ou le processeur.

Fig. 1

EP 4 115 336 B1

Convolutional
input features

201

203

Convolutional
output features

Convolutional (or pooling) Layer

$$o1\left(C_j^{out}\right) = bias\left(C_j^{out}\right) + \sum_{k=0}^{c^{in}-1} weight\left(C_k^{out}, k\right) \star input(N_i, k)$$

H_in

W_in

C_in

W_out

H_out

C_out

EP 4 115 336 B1

Fig. 2

## Fig. 3a

**Stride = 1**
**6x6 -> 6x6**

203

201

Padding

Input

Kernel

## Fig. 3b

**Stride = 2**
**6x6 -> 3x3**

203

Padding = 1

201

Dilation increases
the receptive field
of the convolution

## Fig. 3c

**dilation = 2**
**6x6 -> 4x4**

203

201

EP 4 115 336 B1

## Spatial reduction by using padding, dilation, kernel_size:

201

Purging pixels from
Edges = broken
translation invariance

Smaller by 1,2,3 pixels
D(depends on the
parameter values)

203

### Fig. 4a

## Spatial reduction by using stride:

Purging pixels from
everywhere equally
(mostly) = translation
invariance

2x

203

201

### Fig. 4b

Fig. 5

Fig. 6

EP 4 115 336 B1

FC = Fully connected
GAP = Global average pooling

Fig. 7

700

701a 701c 701e    703a    701g    701i    703b 701k    705 707

701a Conv
701b Conv
701c Conv
701d Conv
701e Conv
703a Pooling
701f Conv
701g Conv
701h Conv
701i Conv
701j Conv
703b Pooling
701k Conv
701l Conv
705 GAP
707 FC

701b 701d    701f    701h 701j    701l

Fig. 8

800

805 807

801a 801b 801c 801d 801e 801f 801g 801h 801i 801j 801k 801l

801a Conv
802a Inter.
801b Conv
802b Inter.
801c Conv
802c Inter.
801d Conv
802d Inter.
801e Conv
802e Inter.
801f Conv
802f Inter.
801g Conv
802g Inter.
801h Conv
802h Intr.
801i Conv
802i Inter.
801j Conv
802j Inter.
801k Conv
802k Inter.
801l Conv
805 GAP
807 FC

802a 802b 802c 802d 802e 802f 802g 802h 802i 802j 802k

21

Fig. 9a

Fig. 9b

Fig. 9c

Fig. 10

| | 8 bit conventional architecture | 8 bit architecture according to embodiment |
|---|---|---|
| Dataset | Total 224K<br>218K train \| 6K Val (from Mate20 office DB) | |
| Model Size | Total 100Kb<br>20Kb weights \| 80Kb Runtime | Total 72Kb<br>8Kb weights \| 64Kb Runtime |
| NN Arch. | Total 72 layers (2 max-pooling)<br>25 convolutions | Total 82 layers(12 bilinear inter.)<br>25 convolutions |
| FLOPs | 10.5 MFlops | 8.7 MFlops |
| Latency | 160 ms | Est. 132 ms |
| Accuracy | 95% | 95% |

Fig. 11

EP 4 115 336 B1

1200

Down-sampling data using a plurality of interpolation layers of a plurality of
processing layers of a neural network, wherein each interpolation layer of
the plurality of processing layers determines a respective output data array
based on a respective input data array using interpolation, wherein a spatial
dimension of the respective output data array comprises less data points
than the corresponding spatial dimension of the respective input data array

1201

Fig. 12

EP 4 115 336 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG, G.** ; **YUAN, G.** ; **LV, M.** ; **LIU, W.** Application of Interpolation Pooling in Convolutional Networks. *HELIX*, 30 June 2018, vol. 8 (4), ISSN 2277-3495, 3465-3469